# EUROPÄISCHE PATENTSCHRIFT

(11) **EP 0 708 220 B1**
(45) Veröffentlichungstag und Bekanntmachung des Hinweises auf die Patenterteilung: **01.10.1997**
(21) Anmeldenummer: 95250254.0
(22) Anmeldetag: 19.10.1995
(51) Int. Cl.: E05F 11/48, E05F 11/38, B60J 1/17

(54) **Vorrichtung zum Verbinden eines Fensterhebers mit der verschiebbaren Fensterscheibe eines Kraftfahrzeugs**
Device for connecting a window regulator with a sliding window glass of a motor vehicle
Dispositif pour connecter un lève-vitre avec une glace de fenêtre coulissante d'un véhicule automobile

(30) Priorität: 20.10.1994 DE 4437532
(43) Veröffentlichungstag der Anmeldung: 24.04.1996
(73) Patentinhaber: Brose Fahrzeugteile GmbH & Co. KG, 96450 Coburg (DE)
(72) Erfinder: Schust, Gerhard, D-96279 Weidhausen (DE); Langmann, Erik, D-96450 Coburg (DE)
(74) Vertreter: Ninnemann, Detlef, Dipl.-Ing.

(56) Entgegenhaltungen:
- DE-A- 4 239 601

## Beschreibung

Die Erfindung bezieht sich auf eine Vorrichtung zum Verbinden eines Fensterhebers mit der verschiebbaren Fensterscheibe eines Kraftfahrzeuges gemäß dem Oberbegriff des Anspruchs 1. Eine derartige Vorrichtung ist aus DE-A-42 39 601 bekannt.

Aus der EP-B1 0 070 815 ist ein Trägerelement bekannt, das als einstückiger Plastikkörper ausgebildet und an abstehenden Armen eines Gleitschlittens eines Seilfensterhebers geführt ist. Sein stiftartiger, einem Scheibenloch zugeordneter Vorsprung weist federnd verformbare Zungen auf, die einen axialgerichteten Kanal umschließen. Dieser Kanal dient zur Aufnahme einer Schraube, bei deren Eindrehen die federnden Zungen gegen die Wandung des Scheibenloches gepreßt werden, wobei die an den freien Enden der Zungen angeformten Vorsprünge den Rand des Scheibenloches hintergreifen.

Eine lösbare Schraubenverbindung unter Einbeziehung einer Bohrung in der Fensterscheibe eines Kraftfahrzeugs beschreibt die DE 25 28 705 C2. Sie verwendet ein in die Bohrung eingreifendes zapfenförmiges, konisches Teil aus einem elastischen und zwischen einem Schraubenkopf und einer Schaubenmutter stauchbaren Material. Beim Anziehen der Verschraubung bildet sich am freien Ende des Zapfen seine Wulst, die die Fensterscheibe mit der Verbindungsvorrichtung verspannt.

Aus der DE 35 35 719 C1 ist eine Befestigungsanordnung zum Fixieren des Bolzens eines Fensterheber-Mitnehmers innerhalb eines Bohrungstoleranzen aufweisenden Scheibenloches beschrieben. Dabei soll eine einfache Befestigung mit genau dosierter Befestigungskraft gewährleistet werden. Dies gelingt unter Einsatz eines durch die Bohrung geführten expandierbaren elastischen Ringelements mit spiralförmig ausgebildeten Innenflächen, die gegen zugeordnete Außenflächen eines Bajonettverschlusses verspannbar sind.

Allen vorstehend beschriebenen Lösungen haftet der Nachteil an, daß sie keine variable Lage zwischen der Position des Scheibenloches und der Verbindungsvorrichtung zum Fensterheber zulassen. Deshalb müssen zur Justierung der Fensterscheibe anderenorts Mittel vorgesehen werden, die einen Ausgleich der in den Systemen vorhanden Toleranzen gewährleisten.

Aus der DE 42 39 601 A1 ist eine Fensterhebervorrichtung mit einer Führungsschiene bekannt, auf der ein Mitnehmer verschieblich lagert. Zur Verbindung dieses Mitnehmers mit der Fensterscheibe ist ein separater Halter mit wenigstens einem angefederten, von einer Schraube aufspreizbaren dübelartigen Fortsatz vorgesehen, der in das Scheibenloch eingreift. Die einander zugewandten Anlagenflächen zwischen Mitnehmer und dem separaten Halter tragen paßfähige Formschlußelemente, deren Ausrichtung mit der Längsachse eines im Mitnehmer eingearbeiteten Langlochs übereinstimmt. Eine durch das Langloch hindurchgreifende und den dübelartigen Fortsatz aufspreizende Schraube stellt die Verbindung zwischen Fensterscheibe und Fensterheber her. Diese bekannte Vorrichtung dient zur Vermeidung von Knarzgeräuschen, die aufgrund von Relativbewegungen zwischen dem Mitnehmer und dem Halter auftreten können.

Das bei der bekannten Vorrichtung vorgesehene Langloch dient dem Ausgleich von Toleranzen, eine feste und dauerhafte Scheibeneinstellung ist hierdurch weder vorgesehen noch möglich, da in Richtung der Längsachse des Langloches nur Kraftschluß besteht. Durch das typische Setzverhalten von Kunststoff unter Wärme- und Krafteinwirkung kann ein späteres Verschieben des Mitnehmers bezüglich des Halters nicht verhindert werden. Auch ein Verdrehen zwischen Mitnehmer und Fensterscheibe kann nicht unterbunden werden, so daß der Einsatz der beschriebenen Vorrichtung nicht für einsträngige Seilfensterheber in Frage kommt.

Aus der US-C-4 866 895 ist ein einstückiges, in Verbindung mit einem Scheibenloch an die Fensterscheibe anclipsbares Kunststoffteil bekannt, das im unteren Bereich federnde Flügel aufweist, die in zugehörige Öffnungen einer Heberschiene einschnappen können.

Ausgehend von der aus der DE 42 39 601 A1 bekannten Vorrichtung liegt der Erfindung die Aufgabenstellung zugrunde, eine Vorrichtung zum Verbinden eines Fensterhebers mit einer verschiebbaren Fensterscheibe eines Kraftfahrzeugs zu schaffen, die eine einfache und sichere Justierung der Fensterscheibe schon während des Befestigungsprozesses der Fensterscheibe über ein Scheibenloch gewährleistet, Verlagerungen des Mitnehmers gegenüber dem Halter und gegenüber der Fensterscheibe ausschließt und die universell einsetzbar ist.

Erfindungsgemäß wird diese Aufgabe durch die kennzeichnenden Merkmale des Patentanspruchs 1 gelöst.

Demgemäß besitzt das äußere Einsteckteil eine als schlitzförmige Öffnung ausgebildete Ausnehmung, in der das innere Einsteckteil in Montageposition zumindest solange verschiebbar lagert, bis das innere Einsteckteil mit dem äußeren Einsteckteil verspannt ist. Dieses Konstruktionsprinzip ermöglicht eine vereinfachte Montage des Fensterhebers an der Fensterscheibe, weil die zum Teil erheblichen Toleranzen des Abstandes zwischen zwei Scheibenlöchern problemlos ausgeglichen werden. Die in Abhängigkeit der maximal auftretenden Toleranzen dimensionierten schlitzförmigen Öffnungen des äußeren Einsteckteils gewährleisten stets die Paßfähigkeit der Verbindungsvorrichtung, ohne komplizierte bzw. die Geschicklichkeit des Werkers herausfordernde Anpassungen.

Gleichzeitig dienen die schlitzförmigen Öffnungen, in denen die inneren, z.B. mit einem Gleiter eines Seilfensterhebers verbundenen Einsteckteile verschiebbar lagern, der Justierung der Fensterscheibe. Dies erfolgt durch Aufspreizen der Teile des inneren Einsteckteils gegen das äußere Einsteckteil, wodurch deren quer zur Verschieberichtung verlaufenden Verzahnungen miteinander in Eingriff treten und somit die relative Lage des Scheibenlochs zum Befestigungsteil des Fensterhebers (z.B. des Gleiters eines Seilfensterhebers) festlegt. Zum Aufspreizen eignen sich besonders Schrauben, aber auch einclipsbare gewindelose Bolzen.

Im Unterschied zu der aus der DE 42 39 601 A1 bekannten Vorrichtung bildet der Mitnehmer mit dem spreizbaren Fortsatz des inneren Einsteckteils einen einheitlichen Körper wobei das innere Einsteckteil gegenüberliegende parallele Flächen aufweist, die mit den zugeordneten parallelen Flächen des äußeren Einsteckteils korrespondieren. Die Kontur des äußeren Einsteckteils bildet zum einen die schlitzförmige Öffnung, in der das innere Einsteckteil während der Montage verschieblich lagert, und ist zum anderen der Kontur des Scheibenloches angepaßt.

Nachdem die Fensterscheibe während des Montagevorganges in der Tür ausgerichtet (justiert) wurde, wird eine Schraube oder ein Bolzen in den zentralen Kanal des inneren Einsteckteils geführt, wodurch nicht nur die Verbindung zwischen Fensterheber und Fensterscheibe entsteht, sondern gleichzeitig auch die Verzahnungselemente der beiden Einsteckteile miteinander in formschlüssigen Eingriff treten und diese Position dauerhaft verriegeln.

Diese Vorteile werden durch das zweiteilig ausgeführte Einsteckteil (inneres Einsteckteil und äußeres Einsteckteil) mit ihren parallelen Flächen erzielbar.

Die Erfindung eignet sich besonders zum Einsatz an Fensterhebern, die zwei Befestigungspunkte zur Fensterscheibe vorsehen, wie dies bei Kreuzarmfensterhebern und doppelsträngigen Seilfensterhebern der Fall ist. Entsprechend den Anforderungen des Einzelfalles kann die Ausrichtung der Schlitzförmigen Öffnungen, in denen die inneren Einsteckteile verschiebbar lagern, unidirektional oder auch unterschiedlich sein. Beispielsweise kann ein Schlitz horizontal und der andere schräg, mit einem gewissen Winkel ausgerichtet sein, um zusätzlich in der Vertikalen ausgleichende Wirkungen erzielen zu können.

Bei Verwendung unidirektionaler Schlitze in Verbindung mit einem doppelsträngigen Seilfensterheber kann auch vorgesehen werden, einen Befestigungspunkt (d.h., ein inneres Einsteckstück im äußeren Einsteckstück) festzulegen und den anderen Befestigungspunkt zum Ausgleich von Toleranzen, die während des Scheibenhubes auftreten, verschieblich zu belassen.

Gemäß einer bevorzugten Ausführungsform der Erfindung trägt die obere der parallelen Flächen des äußeren Einsteckteils keine Verzahnungselemente, so daß eine leichte Verschiebbarkeit des inneren Einsteckteils innerhalb des Schlitzes zum Zwecke der Justierung der Fensterscheibe gewährleistet ist.

Weiterhin ist es vorteilhaft, daß beide parallelen Flächen des inneren Einsteckteils mit Verzahnungselementen versehen sind, so daß das Basisteil sowohl für linke als auch für rechte Ausführungen der Verbindungsvorrichtung, d.h. nur eine Ausführungsform des Mitnehmers für rechte und linke Fensterheber verwendet werden kann.

Zur Erleichterung der Handhabbarkeit der erfindungsgemäßen Vorrichtung sieht eine Vorzugsvariante der Erfindung eine Montageplatte mit Mitteln zur Verdrehsicherung vor, die außerdem das äußere Einsteckteil trägt. Solche Verdrehsicherungen sind als abgewinkelte Stege und/oder als Fortsätze der Montageplatte ausgebildet und und treten mit zugeordneten Anschlagsflächen des Basisteils in Eingriff. Durch die verdrehsichere Lage aller verwendeten Einzelteile wird die erfindungsgemäße Vorrichtung auch für einsträngige Seilfensterheber verwendbar.

Gemäß einer Vorzugsvariante der Erfindung ist der Randbereich der zylinderabschnittförmigen Teile des äußeren Einsteckteils teilweise von Entlastungsstützen begrenzt, so daß sie radial federn können. So kann beim Aufspreizen des inneren Einsteckteils eine vollständige Anlage des äußeren Einsteckteils an die Kontur des Scheibenloches erzielt werden, auch wenn die Durchmessertoleranzen des Scheibenloches relativ groß sind.

Um einen definierten Anschlag auf der dem Basisteil gegenüberliegenden Seite der Fensterscheibe zu gewährleisten, ist weiterhin vorgesehen, eine Abdeckplatte mit einer Öffnung zu verwenden, deren Durchmesser dem oberen Toleranzmaß des Scheibenloches entspricht. In Montageposition umgreift diese Öffnung die über den Rand des Scheibenloches hinausstehenden Bereiche des äußeren Einsteckteils. Vorzugsweise sind die Montageplatte und die Abdeckplatte ein über ein sog. Filmscharnier verbundenes, einstückig ausgebildetes Kunststoffteil.

Nachfolgend wird die Erfindung anhand eines Ausführungsbeispiels und der dargestellten Figuren näher erläutert. Es zeigen:
- figur 1a: eine perspektivische Explosivdarstellung der Verbindungsvorrichtung;
- Figur 1b: eine perspektivische Explosivdarstellung der Verbindungsvorrichtung wie in Figur 1a, jedoch mit einer um 180° gedrehten Ansicht;
- Figur 2: eine Schnittdarstellung durch die Befestigungsvorrichtung mit eingedrehter Befestigungsschraube;
- Figur 3: eine vergrößerte perspektivische Darstellung des Basisteils;
- Figur 4: eine perspektivische Darstellung der Abdeckplatte;
- Figur 5a: eine perspektivische Darstellung der Montageplatte;
- Figur 5b: eine perspektivische Darstellung der Montageplatte wie in Figur 5a, jedoch mit einer um 180° gedrehten Ansicht.

Das nachfolgend beschriebene und in den Figuren dargestellte Ausführungsbeispiel spiegelt nur eine der möglichen Varianten der Erfindung wider. Ebenso ist die Anwendbarkeit der Erfindung nicht nur auf Seilfensterheber beschränkt. Auch Armfensterheber können mit der erfindungsgemäßen Verbindungsvorrichtung ausgestattet werden. Sämtliche Teile sind in Kunststoff ausgeführt.

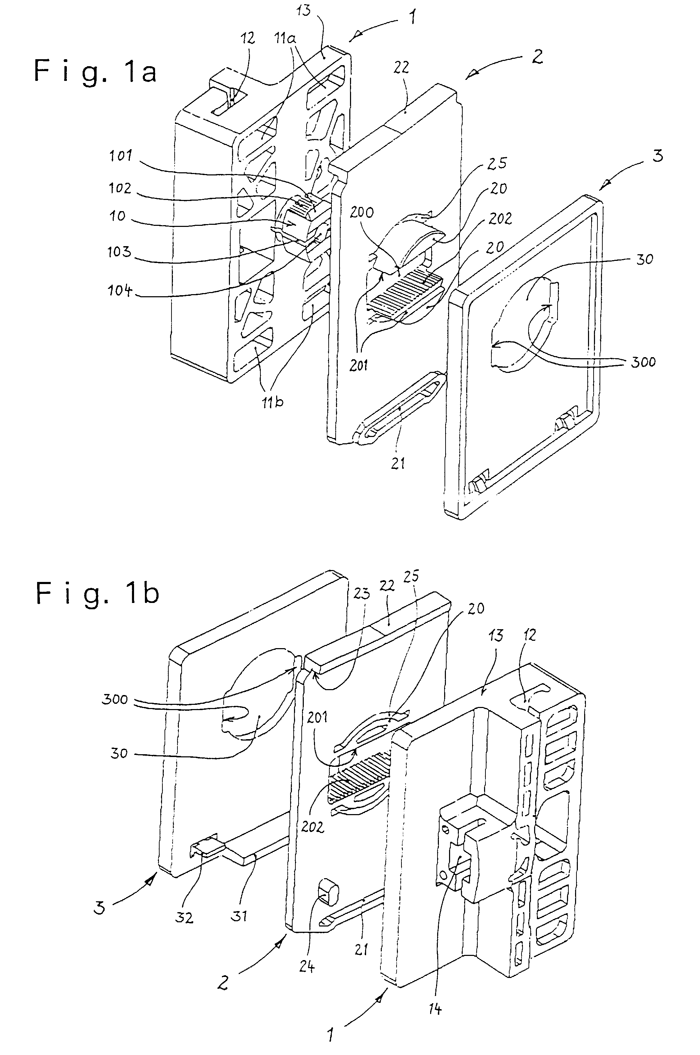

Die perspektivischen Explosivdarstellungen der Figuren 1a und 1b zeigen eine dreiteilige Variante der erfindungsgemäßen Verbindungsvorrichtung, die zur Verbindung eines Seilfensterhebers mit der Fensterscheibe eines Kraftfahrzeugs vorgesehen ist. Sie besteht aus einem Basisteil 1, einer Montageplatte 2 und einer Abdeckplatte 3.

Über den abgewinkelten Führungsschlitz 12 des Basisteils 1 steht dieses in gleitender Verbindung mit der (nichtdargestellten) Führungsschiene eines Seilfensterhebers, die mit einem paßfähigen Bereich formschlüssig in den Schlitz 12 eingreift. Üblicherweise ist zur Übertragung der Verstellkräfte eine angetriebene Seilschlaufe mit einem daran befestigten Seilnippel vorgesehen, der in einer Nippelkammer 14 lagert.

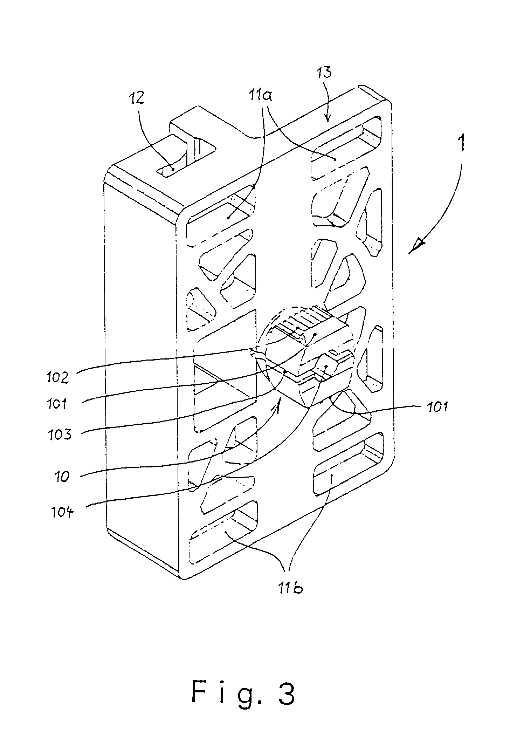

Die der Nippelkammer gegenüberliegende Seite des Basisteils 1 trägt ein inneres Einsteckteil 10, das durch einen Schlitz 103 horizontal gespalten und bei Einführung einer geeigneten Schraube oder dergleichen in den axial verlaufenden Kanal 104 spreizbar ist (siehe auch Figur 3). Der obere sowie der untere Bereich des inneren Einsteckteils 10 tragen Verzahnungselemente 102, die jeweils horizontal verlaufende, zueinander parallele Flächen bilden, wobei die Verzahnungselemente 102 quer zur Verschieberichtung des inneren Einsteckteils 10 innerhalb der ebenfalls horizontal verlaufenden schlitzförmigen Öffnung 200 der Montageplatte 2 ausgerichtet sind. Darüber hinaus besitzt das Basisteil 1 Ausnehmungen 11a,11b, in die - in Montageposition - Fortsätze 24 der Montageplatte 2 eingreifen.

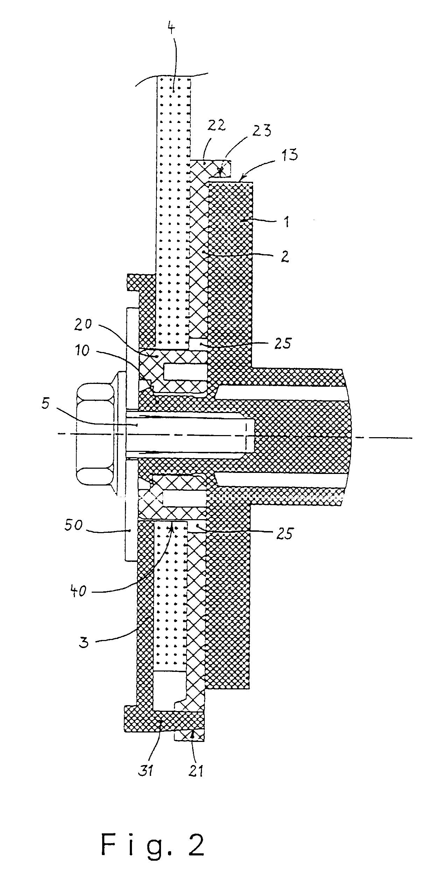

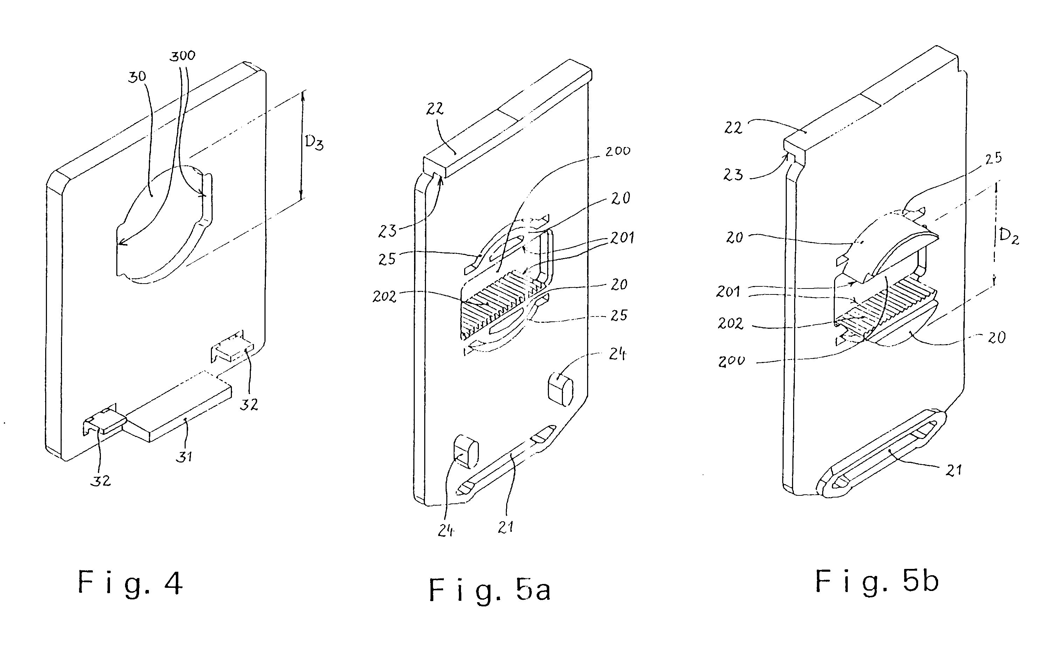

Das einem Scheibenloch 40 (siehe Figur 2) zugeordnete äußere Einsteckteil 20 der Montageplatte 2 (Einzeldarstellungen siehe Figuren 5a und 5b) besitzt im wesentlichen die Form von zwei gegenüberliegenden Abschnitten eines Zylinders, deren ebene Abschnittsflächen 201 den Schlitz 200 an zwei Seiten begrenzen. Von den Flächen 201 trägt nur die untere Fläche 201 Verzahnungselemente 202, die die gleiche Ausrichtung wie die Verzahnungselemente 102 des inneren Einsteckteils 10 aufweisen. Die obere Fläche 201 ist glatt, damit unter dem Gewicht der Fensterscheibe ein problemloses Verschieben des inneren Einsteckteils 10 innerhalb des Schlitzes 200 möglich bleibt, bis eine Spreizung des inneren Einsteckteils erfolgt.

Die beiden zylinderabschnittförmigen Bereiche des von der Montageplatte 2 getragenen äußeren Einsteckteils 20 grenzen mit ihrer gewölbten Kontur an einen Entlastungsschlitz 25, der eine gleichmäßige radiale Spreizung der beiden Bereiche erlaubt. Der Durchmesser D2 des äußeren Einsteckteils 20 entspricht vorzugsweise dem unteren Toleranzmaß des Scheibenloches 40. Im oberen Bereich ist die Montageplatte 2 durch einen Steg 22 begrenzt, dessen untere Anschlagsfläche 23 der Anschlagsfläche 13 des Basisteils 1 zugeordnet ist und ein unerwünschtes Verdrehen von Basisteil 1 und Montageplatte 2 zueinander verhindert. Zu diesem Zweck können alternativ oder auch zusätzlich Fortsätze 24 an der Montageplatte 2 vorgesehen sein, die in Montageposition in Ausnehmungen 11a oder 11b des Basisteils eingreifen. Je nachdem, ob das Basisteil 1 in der Fahrer- oder Beifahrertür und damit in der dargestellten oder in einer um 180° gedrehten Lage eingesetzt wird, greifen die Fortsätze 24 entweder in die unteren Ausnehmungen 11b oder in die oberen Ausnehmungen 11a. Analoges gilt für den Eingriff der Anschlagsfläche 23 der Montageplatte 2 auf die obere bzw. untere Anschlagsfläche 13 des Basisteils 1.

Im unteren Bereich besitzt die Montageplatte 2 einen Schlitz 21 zur steckbaren Verbindung mit dem Steg 21 einer Abdeckplatte 3, die auf der anderen Seite der Fensterscheibe 4 angeordnet ist. Mit ihrer Öffnung 30, deren Durchmesser vorzugsweise dem maximalen Toleranzmaß des Scheibenloches 40 entspricht, wird der über die Ebene der Fensterscheibe 4 hinausragende Bereich des äußeren Einsteckteils umgriffen. Der Abstand der seitlichen Begrenzungsflächen 300 entspricht der Weite des Schlitzes 200 in der Montageplatte 2. In einer Ebene oberhalb des Steges 31 sind zwei Anschläge 32 an der Abdeckplatte 3 angeformt, die während des Montageprozesses mit der Unterkante der Fensterscheibe in Eingriff treten sollen.

Bei der Montage der Fensterscheibe am Fensterheber sind grundsätzlich zwei verschiedene Vorgehensweisen ausführbar. Zum einen können die Montageplatte 2 und die Abdeckplatte 3 an der Fensterscheibe 4 vormontiert sein und nach dem Einführen der Fensterscheibe 4 in den Türschacht durch Einstecken des inneren Einsteckteils 10 in den Schlitz 200 des äußeren Einsteckteils 20 mit dem Fensterheber verbunden werden. Dazu wird zunächst das äußere Einsteckteil 20 in das Scheibenloch 40 eingeführt, wobei der Schlitz 21 zur Verbindung mit der Abdeckplatte 3 der Unterkante der Fenstrescheibe 4 zugeordnet ist. Anschließend wird die Abdeckplatte 3 über den Steg 31 von der andere Seite der Fensterscheibe 4 her auf die Montageplatte 2 aufgesteckt.

Es besteht auch die Möglichkeit, die Steckverbindung 21,31 durch ein (nicht dargestelltes) Filmscharnier zu einem einstückigen Bauteil zu verbinden und somit den Aufwand für Logistik und Handling zu verringern.

Anschließend wird in den Schlitz 200 der auf der Fensterscheibe 4 vormontierten Montageplatte 2 das innere Einsteckteil 10 des mit dem Fensterheber verbundenen Basisteils 1 eingesteckt. Eine Fase (schräggestellte Fläche 101) am freien Ende des inneren Einsteckteils 10 erleichtert das Einführen in den Schlitz 200.

Nun kann die Justierung der Fensterscheibe 4 erfolgen. Bei der dargestellten Ausführungsform sind toleranzausgleichende Verschiebungen in der horizontalen Ebene möglich. Da die obere Fläche 201 des äußeren Einsteckteils 20 keine Verzahnungselemente trägt, kann die Justierung mühelos trotz des sich auf dem inneren Einsteckteil 10 abstützenden Scheibengewichts vorgenommen werden. Sobald Fensterheber und Fensterscheibe ihre ideale Position zueinander eingenommen haben, wird in den axialen Kanal 104 des inneren Einsteckteils 10 eine Schaube 5 eingedreht, wobei die Einsteckteile 10,20 gespreizt werden und die unteren Verzahnungselemente 102 des inneren Einsteckteils 10 mit den Verzahnungselementen 202 des äußeren Einsteckteils 20 in formschlüssigen Eingriff treten. Somit ist die Relativposition zwischen Fensterheber und Fensterscheibe 4 festgelegt.

Um einen sicheren Halt der Verbindung zu gewährleisten, sollte ein Schraubenkopf mit einem Duchmesser größer als der Durchmesser des Scheibenloches 40 gewählt werden. Anderenfalls verwendet man eine Unterlegscheibe 50, die die entsprechenden Anforderungen erfüllt.

Die andere Vorgehensweise bei der Montage sieht vor, die Montageplatte 2 zuerst durch Aufstecken auf das innere Einsteckteil 10 mit dem Basisteill zu verbinden. Erst danach wird die Fensterscheibe 4 über das Scheibenloch 40 auf das äußere Einsteckteil 20 aufgesteckt und die Abdeckplatte aufgelegt. Justage und Arretierug erfolgen wie schon voranstehend beschrieben. Diese Variante besitzt den Vorteil, daß die Fensterscheibe 4 ohne Anbauteile und somit einfacher in den schmalen Spalt des Türschachtes eingeführt werden kann.

### Bezugszeichenliste

- 1 -: Basisteil
- 10 -: inneres Einsteckteil
- 11a -: Ausnehmung
- 11b -: Ausnehmung
- 12 -: Führungsschlitz zur Aufnahme einer Führungsschiene
- 13 -: Anschlagsfläche
- 14 -: Nippelkammer

- 101 -: Fläche
- 102 -: Verzahnungselemente
- 103 -: Schlitz
- 104 -: Kanal

- 2 -: Montageplatte
- 20 -: äußeres Einsteckteil
- 21 -: Schlitz der Steckverbindung
- 22 -: Steg der Verdrehsicherung
- 23 -: Anschlagsfläche
- 24 -: Fortsatz
- 25 -: Entlastungsschlitz

- 200 -: schlitzförmige Öffnung
- 201 -: parallele Fläche
- 202 -: Verzahnungselemente
- 3 -: Abdeckplatte
- 30 -: Öffnung
- 31 -: Steg der Steckverbindung
- 32 -: Anschlag für Scheibenkante
- 300 -: seitliche Begrenzungsfläche

- 4 -: Fensterscheibe
- 40 -: Scheibenloch

- 5 -: Schraube
- 50 -: Unterlegscheibe

- D2 -: Durchmesser
- D3 -: Durchmesser

## Patentansprüche

1. Vorrichtung zum Verbinden eines Fensterhebers mit der verschiebbaren Fensterscheibe (4) eines Kraftfahrzeuges unter Verwendung eines Scheibenloches (40), in dem ein äußeres expandierbares oder spreizbares Einsteckteil der Vorrichtung im eingebauten Zustand lagert, dessen Länge im wesentlichen der Scheibendicke entspricht, und wobei ein inneres, mit einem mit dem Fensterheber verbindbares Basisteil (1) verbundenes Einsteckteil (10) der Vorrichtung in einer Ausnehmung (200) des äußeren Einsteckteils (20) gelagert ist und auf das äußere Einsteckteil (20) expandierend bzw. spreizend einwirken kann, wodurch ein Eingriff mit der Kontur des Scheibenloches (40) entsteht,
**dadurch gekennzeichnet**,
daß die Ausnehmung (20) als schlitzförmige Öffnung (200) des äußeren Einsteckteils (20) mit gegenüberliegenden parallelen Flächen (201) ausgebildet ist, denen parallele Flächen (101) des inneren Einsteckteils (10) zugeordnet sind, wobei wenigstens ein Paar der einander zugeordneten parallelen Flächen (101, 201) mit quer zur Längsachse der schlitzförmigen Öffnung (200) ausgerichteten Verzahnungselementen (201, 202) versehen ist, und daß das innere Einsteckteil (10) ebenfalls expandierbar bzw. spreizbar ausgebildet und fest mit dem Basisteil verbunden ist und bei seiner Spreizung, z.B. mittels einer Schraube (5) oder dgl., die Verzahnungselemente (201, 202) ineinandergreifen, so daß eine formschlüssige Fixierung der Lage des inneren Einsteckteils (10) in der schlitzförmigen Öffnung (200) des äußeren Einsteckteils (20) erfolgt, wobei in Montageposition das innere Einsteckteil (10) in der schlitzförmigen Öffnung (100) und in der Längsachse dieser Öffnung (100) zumindest solange verschiebbar lagert bis die formschlüßige Fixierung bewirkt wird.

2. Vorrichtung nach Anspruch 1, **dadurch gekennzeichnet**, daß die schlitzförmige Öffnung (200) in X-Richtung, das heißt im wesentlichen in Fahrtrichtung des Fahrzeuges, oder in Y-Richtung, das heißt im wesentlichen in Verschieberichtung der Fensterscheibe (4), ausgerichtet ist.

3. Vorrichtung nach Anspruch 1, **dadurch gekennzeichnet**, daß die obere der parallelen Flächen (201) des äußeren Einsteckteils (20) ohne Verzahnungselemente ausgebildet ist.

4. Vorrichtung nach Anspruch 1 und 3, **dadurch gekennzeichnet**, daß beide parallelen Flächen (101) des inneren Einsteckteils (10) mit Verzahnungselementen (102) versehen sind.

5. Vorrichtung nach Anspruch 1, **dadurch gekennzeichnet**, daß das innere Einsteckteil (10) symmetrisch in der Längsachse der schlitzförmigen Öffnung (200) geteilt ist und in seiner Achse einen Kanal (104) aufweist, und daß eine Schraube (5) oder dergleichen vorgesehen ist, die beim Einführen in den Kanal (104) das innere Einsteckteil (10) soweit spreizt, daß über die in Eingriff tretenden Verzahnungen (102, 202) die relative Position zwischen dem Scheibenloch (40) und dem inneren Einsteckteil (10) bzw. dem Basisteil (1) festgelegt ist.

6. Vorrichtung nach wenigstens einem der voranstehenden Ansprüche, **dadurch gekennzeichnet**, daß das äußere Einsteckteil (20) Bestandteil einer Montageplatte (2) ist, die Mittel zur Verdrehsicherung gegenüber dem Basisteil (1) aufweist.

7. Vorrichtung nach Anspruch 6, **dadurch gekennzeichnet**, daß wenigstens in einem Randbereich der Montageplatte (2) ein oder mehrere abgewinkelte Stege (22) vorgesehen sind, die in Montageposition die äußere Kontur des Basisteils (1) unmittelbar übergreifen und miteinander Anschlagflächen (13, 23) bilden.

8. Vorrichtung nach Anspruch 6 oder 7, **dadurch gekennzeichnet**, daß die Montageplatte (2) Fortsätze (24) trägt, die in Montageposition in zugeordneten Ausnehmungen (11) des Basisteils (1) eingreifen.

9. Vorrichtung nach Anspruch 6, **dadurch gekennzeichnet**, daß die dem Scheibenloch (4) zugewandten Außenflächen der linderabschnittförmigen Elemente des äußeren Einsteckteils (20) eine gewölbte Kontur aufweisen, die auch in der Ebene der Montageplatte radial federnd ausgebildet und bei ihrer Spreizung an den Rand des Scheibenlochs (4) angedrückt ist.

10. Vorrichtung nach wenigstens einem der voranstehenden Ansprüche, **dadurch gekennzeichnet**, daß das äußere Einsteckteil (20) das Scheibenloch (40) durchragt und einen Hüllkreisdurchmesser (D₂) mit dem unteren Toleranzmaß des Scheibenlochs (40) aufweist, und daß eine Abdeckplatte (3) mit einer Öffnung (30) vorgesehen ist, deren Durchmesser (D₃) dem oberen Toleranzmaß des Scheibenloches (40) entspricht und die in Montageposition über den Rand des Scheibenloches (40) überstehenden Bereiche des äußeren Einsteckteils (20) umgreift.

11. Vorrichtung nach Anspruch 10, **dadurch gekennzeichnet**, daß die Abdeckplatte (3) über eine Steckverbindung (21, 31) mit der Montageplatte (2) verbindbar ist.

12. Vorrichtung nach Anspruch 10 oder 11, **dadurch gekennzeichnet**, daß die Abdeckplatte (3) Anschläge (32) zur Vormontage von Abdeckplatte (3) und Montageplatte (2) an der Fensterscheibe (4) aufweisen, die der Scheibenunterkante zugeordnet sind.

## Claims

1. Device for connecting a window regulator with the displaceable window pane (4) of a motor vehicle by using a hole (40) in the pane in which an external expanding or spreading insert part of the device is mounted in the installed state, the length of the insert part corresponding substantially to the thickness of the pane, and wherein an inner insert part (10) of the device connected to a base part (1) connectable with the window regulator is mounted in a recess (200) of the outer insert part (20) and can act with expanding or spreading force on the outer insert part (20), whereby an engagement is produced with the contour of the hole (40) in the pane,
characterised in that the recess (20) is designed as a slit-like opening (200) of the outer insert part (20) with opposing parallel faces (201) which are associated with parallel faces (101) of the inner insert part (10) wherein at least a pair of associated parallel faces (101, 201) is provided with toothed elements (201, 202) aligned transversely to the longitudinal axis of the slit-like opening (200) , and that the inner insert part (10) is likewise designed to expand or spread out and is fixedly connected to the base part and during its expansion , eg by means of a screw (5) or the like, the toothed elements (201, 202) engage in each other so that a keyed fixing of the position of the inner insert part (10) in the slit like opening (200) of the outer insert part (20) takes place whereby in the assembly position the inner insert part (10) is mounted displaceable in the slit like opening (100) and in the longitudinal axis of this opening (100) at least until the keyed fixing has been effected.

2. Device according to claim 1 characterised in that the slit like opening (200) is aligned in the X-direction, that is substantially in the travel direction of the vehicle, or in the Y-direction, that is substantially in the displacement direction of the window pane (4).

3. Device according to claim 1 characterised in that the upper face of the parallel faces (201) of the outer insert part (20) is formed without toothed elements.

4. Device according to claims 1 and 3 characterised in that both parallel faces (101) of the inner insert part (10) are provided with toothed elements (102).

5. Device according to claim 1, characterised in that the inner insert part (10) is divided symmetrically in the longitudinal axis of the slit like opening (200) and has a channel in its axis, and that a screw (5) or the like is provided which during insertion in the channel (104) spreads the inner insert part (10) so far that through the engaging toothed elements (102, 202) the relative position is fixed between the hole (40) in the pane and the inner insert part (10) or base part (1).

6. Device according to at least one of the preceding claims, characterised in that the outer insert part (20) is a component part of an assembly plate (2) which has means for security against rotation relative to the base part (1).

7. Device according to claim 6 characterised in that at least in a marginal area of the assembly plate (2) there are one or more angled webs (22) which in the assembly position engage directly over the outer contour of the base part (1) and form together stop faces (13, 23).

8. Device according to claim 6 or 7 characterised in that the assembly plate (2) supports projections (24) which in the assembly position engage in associated recesses (11) of the base part (1).

9. Device according to claim 6 characterised in that the outer faces of the cylinder section shaped elements of the outer insert part (20) facing the pane hole (4) have a curved contour which is also formed radially resilient in the plane of the assembly plate and during expansion is pressed against the edge of the pane hole (4).

10. Device according to at least one of the preceding claims, characterised in that the outer insert part (20) passes through the pane hole (40) and has a circular sleeve diameter (D2) with the lower tolerance measurement of the pane hole (40) and that a cover plate (3) is provided with an opening (30) whose diameter (D3) corresponds to the upper tolerance measure of the pane hole (40) and engages round the areas of the outer insert part (20) protruding over the edge of the pane hole (40) in the assembly position.

11. Device according to claim 10 characterised in that the cover plate (3) is connectable with the assembly plate (2) through an insert connection (21, 31).

12. Device according to claim 10 or 11 characterised in that the cover plate (3) has stops (32) for prefitting the cover plate (3) and assembly plate (2) on the window pane (4) and these are associated with the lower edge of the pane.

## Revendications

1. Dispositif pour relier un lève-vitre à la vitre coulissante (4) d'un véhicule automobile, à l'aide d'un trou (40) pratiqué dans la vitre et dans lequel est logée, à l'état intégré, une partie emboîtable extérieure du dispositif, expansible ou écartable, et dont la longueur correspond pour l'essentiel à l'épaisseur de la vitre, une partie emboîtable intérieure (10) du dispositif, reliée à une partie d'embase (1) pouvant être reliée au lève-vitre, étant logée dans un évidement (200) de la partie emboîtable extérieure (20) et pouvant agir sur ladite partie emboîtable extérieure (20), avec effet d'expansion ou d'écartement, ce qui établit une venue en prise avec le contour du trou (40) de la vitre,
caractérisé par le fait
que l'évidement (20) est réalisé comme une ouverture (200) de la partie emboîtable extérieure (20), en forme de fente à surfaces parallèles opposées (201) auxquelles sont associées des surfaces parallèles (101) de la partie emboîtable intérieure (10), au moins une paire des surfaces parallèles (101, 201) mutuellement associées étant munie d'éléments de denture (201, 202), orientés transversalement par rapport à l'axe longitudinal de l'ouverture (200) en forme de fente ; et par le fait que la partie emboîtable intérieure (10) est semblablement de réalisation expansible ou écartable et est reliée rigidement à la partie d'embase, et les éléments de denture (201, 202) s'interpénètrent lors de son écartement s'effectuant, par exemple, au moyen d'une vis (5) ou d'une pièce similaire, ce qui instaure une consignation à demeure, par concordance de formes, de la partie emboîtable intérieure (10) dans l'ouverture (200) en forme de fente de la partie emboîtable extérieure (20), dispositif dans lequel, en position de montage, la partie emboîtable intérieure (10) est logée à coulissement dans l'ouverture (100) en forme de fente, selon l'axe longitudinal de cette ouverture (100), au moins jusqu'à ce que la consignation à demeure par concordance de formes soit instaurée.

2. Dispositif selon la revendication 1, caractérisé par le fait que l'ouverture (200) en forme de fente est orientée dans la direction des X, c'est-à-dire pour l'essentiel dans la direction du déplacement du véhicule, ou bien dans la direction des Y, c'est-à-dire pour l'essentiel dans la direction du coulissement de la vitre (4).

3. Dispositif selon la revendication 1, caractérisé par le fait que la surface supérieure, parmi les surfaces parallèles (201) de la partie emboîtable extérieure (20), est réalisée sans éléments de denture.

4. Dispositif selon les revendications 1 et 3, caractérisé par le fait que les deux surfaces parallèles (101) de la partie emboîtable intérieure (10) sont pourvues d'éléments de denture (102).

5. Dispositif selon la revendication 1, caractérisé par le fait que la partie emboîtable intérieure (10) est scindée symétriquement selon l'axe longitudinal de l'ouverture (200) en forme de fente, et présente un canal (104) longeant son axe ; et par le fait qu'il est prévu une vis (5) ou pièce similaire qui, lors de l'insertion dans le canal (104), provoque un écartement de la partie emboîtable intérieure (10) d'une ampleur propre à établir fermement, par l'intermédiaire des dentures (102, 202) venant en prise, la position relative entre le trou (40) de la vitre et, respectivement, la partie emboîtable intérieure (10) ou la partie d'embase (1).

6. Dispositif selon au moins l'une des revendications précédentes, caractérisé par le fait que la partie emboîtable extérieure (20) est une pièce constitutive d'une plaque de montage (2) présentant des moyens de verrouillage antirotation par rapport à la partie d'embase (1).

7. Dispositif selon la revendication 6, caractérisé par le fait qu'une ou plusieurs aile(s) coudée(s) (22), prévue(s) dans au moins une région marginale de la plaque de montage (2), coiffe(nt) directement le contour extérieur de la partie d'embase (1) en position de montage et forment, associativement, des surfaces de butée (13, 23).

8. Dispositif selon la revendication 6 ou 7, caractérisé par le fait que la plaque de montage (2) porte des appendices (24) pénétrant, en position de montage, dans des évidements associés (11) de la partie d'embase (1).

9. Dispositif selon la revendication 6, caractérisé par le fait que les surfaces extérieures des éléments en forme de segments cylindriques de la partie emboîtable extérieure (20), tournées vers le trou (4) de la vitre, présentent une configuration bombée qui est également réalisée douée d'élasticité radiale dans le plan de la plaque de montage et est pressée, lors de son écartement, contre le bord du trou (4) de la vitre.

10. Dispositif selon au moins l'une des revendications précédentes, caractérisé par le fait que la partie emboîtable extérieure (20) traverse le trou (40) de la vitre, et présente un diamètre (D₂) de circonférence enveloppante avec la cote de tolérance inférieure du trou (40) de la vitre ; et par le fait qu'il est prévu une plaque de recouvrement (3) munie d'une ouverture (30) dont le diamètre (D₃) correspond à la cote de tolérance supérieure du trou (40) de la vitre et ceinture les régions de la partie emboîtable extérieure (20) qui dépassent, en position de montage, au-delà du bord du trou (40) de la vitre.

11. Dispositif selon la revendication 10, caractérisé par le fait que la plaque de recouvrement (3) peut être reliée à la plaque de montage (2) par l'intermédiaire d'une solidarisation emboîtable (21, 31).

12. Dispositif selon la revendication 10 ou 11, caractérisé par le fait que la plaque de recouvrement (3) comporte, en vue du préassemblage de la plaque de recouvrement (3) et de la plaque de montage (2) sur la vitre (4), des butées (32) affectées au bord inférieur de la vitre.
